(19) Europäisches Patentamt
European Patent Office
Office européen des brevets

(11) EP 2 441 933 A1

(12) DEMANDE DE BREVET EUROPEEN

(43) Date de publication:
18.04.2012 Bulletin 2012/16

(51) Int Cl.:
*F01N 11/00* (2006.01)  *F02D 41/22* (2006.01)
*C01C 1/00* (2006.01)  *G01F 23/24* (2006.01)
*F01N 3/20* (2006.01)  *B01D 53/56* (2006.01)
*B01D 53/90* (2006.01)  *F01N 9/00* (2006.01)

(21) Numéro de dépôt: 11182145.0

(22) Date de dépôt: 21.09.2011

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME

(30) Priorité: 12.10.2010  FR 1058287

(71) Demandeur: Peugeot Citroën Automobiles SA
78140 Vélizy-Villacoublay (FR)

(72) Inventeurs:
• Grise, Clément
92270 BOIS-COLOMBES (FR)
• Massot, Guillaume
75015 PARIS (FR)

(74) Mandataire: Renous Chan, Véronique et al
Peugeot Citroen Automobiles SA
Propriété Industrielle - LG081
18 rue des Fauvelles
92250 La Garenne Colombes (FR)

(54) **Procédé de controle du fonctionnement d'un système de post-traitement des gaz d'échappement d'un moteur et véhicule adapté pour la mise en oeuvre du procédé**

(57) L'invention concerne un procédé de contrôle du fonctionnement d'un système (10) de post-traitement des gaz d'échappement d'un moteur par injection d'un réactif à l'échappement, caractérisé en ce que le procédé comporte les étapes de :
- estimation de la pression d'équilibre au niveau du capteur (20) en fonction de la température extérieure,
- comparaison d'une pression mesurée par le capteur (20) à la pression d'équilibre et à la pression extérieure.

L'invention concerne en outre un véhicule adapté pour la mise en oeuvre du procédé.

L'invention permet d'obtenir un contrôle plus complet du fonctionnement d'un système de post-traitement des gaz d'échappement.

Figure 1

EP 2 441 933 A1

**Description**

L'invention concerne un procédé de contrôle du fonctionnement d'un système de post-traitement des gaz d'échappement d'un moteur et un véhicule adapté pour la mise en oeuvre du procédé.

La combustion de combustible fossile comme le pétrole ou le charbon dans un système de combustion peut entraîner la production en quantité non négligeable de polluants qui peuvent être déchargés par l'échappement dans l'environnement et y causer des dégâts.

Pour limiter le rejet de tels polluants, des systèmes de post-traitements ont notamment été développés. L'injection d'un réactif à l'échappement permet ainsi de réduire l'émission d'oxydes d'azote (aussi désignés par leur formule chimique générale NOx). Le réactif peut être stocké à l'état gazeux dans un ou plusieurs réservoirs, un organe d'injection ou de dosage permettant l'injection du réactif. Le système est généralement aussi muni d'un capteur de la pression du réactif. Plusieurs architectures de tels systèmes de post-traitement sont notamment décrites dans les documents FR-A-2 930 283 et US-A-2010/0021780.

Lors de l'utilisation d'un des réservoirs, la régulation en pression du réactif permet un dosage correct par l'organe d'injection. Cependant, une dérive du capteur de pression entraîne une erreur de mesure sur la pression du réactif. Il en résulte un mauvais contrôle du système de dosage et une erreur sur la quantité de réactif injecté. Le système de post-traitement peut également être défaillant à cause de l'existence d'une fuite entre le réservoir et l'organe d'injection. Il est ainsi souhaitable de pouvoir connaître l'état de fonctionnement d'un système de post-traitement.

Dans le contexte de l'urée liquide, il est connu du document US-B-6 209 315 une pompe permettant de pomper l'urée vers un accumulateur. L'analyse de la pression et du profil de la pression mesurée est effectuée pour détecter une fuite du circuit ou une fonctionnalité (pompe, accumulateur). Mais, l'état du capteur de pression n'est pas connu ce qui rend la solution du document précité incomplète.

Le document US-A2009/113877 a également trait à de l'urée liquide mais l'état de fonctionnement du capteur de pression est connu en comparaison avec la pression de l'échappement (injecteur ouvert). Mais, le procédé ne détecte pas les fuites du système, ce qui rend la solution du document précité incomplète.

Il existe donc un besoin pour un procédé permettant de contrôler le fonctionnement d'un système de post-traitement des gaz d'échappement de manière plus complète.

Pour cela, il est proposé un procédé de contrôle du fonctionnement d'un système de post-traitement des gaz d'échappement d'un moteur par injection d'un réactif à l'échappement. Le système a une position ouverte et une position fermée et comporte un réservoir comprenant un réactif. Le système comprend en outre un organe de dosage injectant le réactif dans les gaz d'échappement dans la position ouverte et un capteur de pression placé entre le réservoir et l'organe de dosage, la pression du réactif tendant vers une pression d'équilibre dans la position fermée du système. Le procédé comporte les étapes d'estimation de la pression d'équilibre au niveau du capteur en fonction de la température extérieure et de comparaison d'une pression mesurée par le capteur à la pression d'équilibre et à la pression extérieure.

Selon une variante, le réservoir comporte en outre un sel comportant le réactif, le profil de désorption du sel dépendant de la température et de la pression.

Selon un mode de réalisation, le procédé comporte en outre les étapes de détection d'un démarrage du moteur à la suite d'un arrêt du moteur et d'estimation du temps théorique au bout duquel la pression du réactif atteint la pression d'équilibre en fonction de la température extérieure et de la pression au début de l'arrêt du moteur. Le procédé comprend également la comparaison du temps théorique estimé avec le temps d'arrêt du moteur et d'arrêt du procédé si le temps théorique estimé est supérieur au temps d'arrêt.

Selon encore un autre mode de réalisation, le temps d'arrêt est estimé ou mesuré.

En variante, à l'étape de comparaison des pressions, si la pression mesurée est égale à la pression d'équilibre avec une marge de tolérance, il est détecté que le fonctionnement du capteur est correct.

Selon une autre variante, à l'étape de comparaison des pressions, si la pression mesurée est supérieure à la pression d'équilibre à laquelle une marge de tolérance est additionnée et si la pression mesurée est supérieure à la pression extérieure à laquelle est additionnée la marge de tolérance ou si la pression mesurée est inférieure à la pression extérieure à laquelle est soustraite la marge de tolérance, il est détecté que le capteur surestime la pression.

Selon un mode de réalisation, à l'étape de comparaison des pressions, si la pression mesurée est inférieure à la pression d'équilibre à laquelle une marge de tolérance est soustraite et si la pression mesurée est supérieure à la pression extérieure à laquelle est additionnée la marge de tolérance ou si la pression mesurée est inférieure à la pression extérieure à laquelle est soustraite la marge de tolérance, il est détecté que le capteur sous-estime la pression.

En variante, à l'étape de comparaison des pressions, si la pression mesurée est égale à la pression extérieure avec une marge de tolérance et si la pression mesurée est supérieure à la pression d'équilibre à laquelle est additionnée la marge de tolérance ou si la pression mesurée est inférieure à la pression d'équilibre à laquelle est soustraite la marge de tolérance, il est détecté une fuite du réactif entre le réservoir et l'organe de dosage.

Selon encore un autre mode de réalisation, la marge de tolérance est réglable.

Il est également proposé un véhicule d'un système de post-traitement des gaz d'échappement d'un moteur par injection d'un réactif à l'échappement. Le système a une position ouverte et une position fermée et comporte un réservoir comprenant un réactif. Le système comprend en outre un organe de dosage injectant le réactif dans les gaz d'échappement dans la position ouverte, un capteur de pression placé entre le réservoir et l'organe de dosage, la pression du réactif tendant vers une pression d'équilibre dans la position fermée du système. Le véhicule comporte en outre un calculateur adapté à mettre en oeuvre le procédé précédemment décrit.

D'autres caractéristiques et avantages de l'invention apparaîtront à la lecture de la description détaillée qui suit des modes de réalisation de l'invention, donnés à titre d'exemple uniquement et en références aux dessins qui montrent :

- figure 1, un schéma d'un exemple de système de post-traitement ;
- figure 2, un schéma de l'évolution de la pression de désorption du réactif en fonction de la température du $SrCl_2$;
- figure 3, un schéma de l'évolution temporelle de la pression du réactif;
- figure 4, un organigramme de mise en oeuvre d'un exemple de procédé;
- figure 5, un graphique illustrant la pression dans des exemples réservoir en fonction du temps d'arrêt moteur.

Il est proposé un véhicule comportant un système de post-traitement des gaz d'échappement d'un moteur. Le moteur peut notamment être un moteur à essence ou un moteur diesel. Le système de post-traitement fonctionne par injection d'un réactif gazeux à l'échappement. C'est notamment le cas des systèmes SCR (acronyme pour selective catalytic reduction).

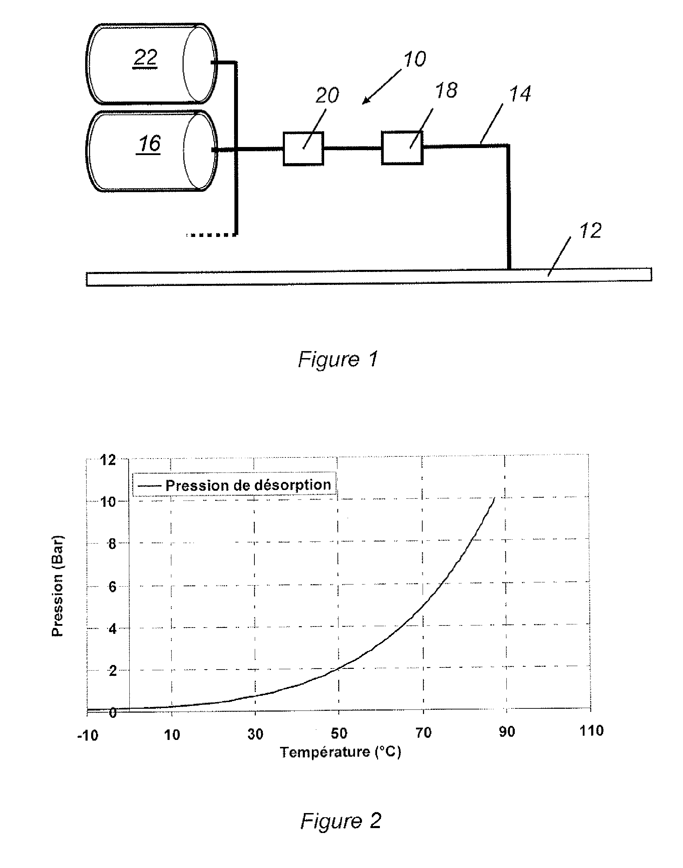

Un tel système 10 est notamment illustré par la figure 1 et permet l'injection dans une ligne 12 d'échappement via une canalisation 14 d'un réactif pour réagir avec les oxydes d'azote et les réduire au sein d'un catalyseur SCR. Le système 10 de post-traitement comprend au moins un réservoir 16 comprenant un réactif. Lorsque le réactif est gazeux, le réservoir 16 a généralement la forme d'une cartouche.

Le réservoir 16 peut notamment comporter un sel comportant le réactif. Le sel a un profil de désorption du réactif dépendant de la température et de la pression. Le sel permet le stockage du réactif gazeux. Le sel peut notamment être du chlorure de strontium (formule chimique $Sr(NH_3)_8Cl_2$ en présence d'un réactif $NH_3$), du chlorure de magnésium (formule chimique $Mg(NH_3)_6Cl_2$ en présence d'un réactif $NH_3$) ou du chlorure de calcium (formule chimique $Ca(NH_3)_8Cl_2$ en présence d'un réactif $NH_3$). A titre d'exemple, la figure 2 illustre, pour un sel de chlorure de strontium, l'évolution de la pression de désorption du réactif ammoniac (formule $NH_3$) en fonction de la température du sel. Pour une température de l'ordre de 20°C, la pression est de l'ordre de 0,5 bar. Une telle pression permet le stockage du réactif. Il est aussi notable qu'en chauffant le réservoir 16, la pression de désorption va augmenter et devenir supérieure à la pression de 1 bar extérieure. Cela permet d'émettre du réactif gazeux en dehors du réservoir 16. Le moyen de chauffage est généralement une résistance chauffante non représentée sur la figure 1.

Afin de permettre une injection bien régulée, le système 10 comporte en outre un organe 18 de dosage injectant le réactif dans les gaz d'échappement, l'organe 18 étant usuellement en coopération avec les moyens de chauffage. L'organe 18 peut en particulier être une électrovanne.

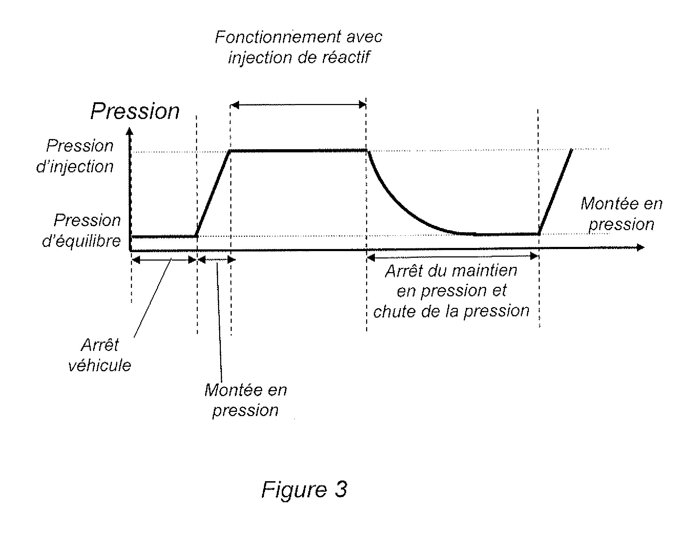

Il est ainsi possible de définir une position ouverte et une position fermée pour le système 10. La position ouverte correspond à l'injection de réactif dans la ligne 12. A l'arrêt du véhicule, le système 10 est dans la position fermée pour empêcher l'injection de réactif. La zone entre l'organe 18 et le réservoir 16 est donc totalement étanche. Avec le refroidissement du réservoir 16, le réactif va être réabsorbé dans le sel et faire baisser la pression dans le réservoir 16 jusqu'à une pression d'équilibre $P_{équilibre}$. Cette pression d'équilibre $P_{équilibre}$ est directement dépendante de la température extérieure du réservoir 16 et de la nature du sel de stockage. En ce sens, la pression d'équilibre peut aussi être qualifiée de pression théorique ou de pression d'équilibre théorique. Dans le cas du chlorure de strontium, pour une température de 20°C, la pression d'équilibre $P_{équilibre}$ est de 0,5 bar environ. La figure 3 illustre un schéma de l'évolution temporelle de la pression du réactif avec une alternance de position fermée du système 10 (arrêt véhicule) et position ouverte (fonctionnement avec injection de réactif).

Le système 10 comprend également un capteur 20 de pression placé entre le réservoir 16 et l'organe 18 de dosage. Le capteur 20 est ainsi en amont de l'organe 18 d'injection par rapport au sens d'écoulement du réactif dans le système 10 de post-traitement.

Plusieurs architectures sont possibles pour le système 10. Ainsi le système peut comprendre un seul réservoir et au moins un capteur de pression en amont de l'organe d'injection. Le système peut également comporter deux réservoirs, deux clapets anti-retour et au moins un capteur de pression en amont de l'organe d'injection. Il est également envisageable de considérer deux grands réservoirs, un petit réservoir, deux clapets anti-retour et au moins un capteur de pression en amont de l'organe d'injection.

Selon l'exemple de la figure 1, une autre architecture est envisagée, le système 10 comporte deux réservoirs 16 et 22, le réservoir 16 étant un réservoir plus grand que le réservoir 22. Le réservoir 16 est la cartouche principale (Main en anglais) alors que le réservoir 22 est la cartouche de démarrage (Start-up en terminologie anglaise). Le réservoir 22 a un temps de réponse plus rapide que le réservoir 16 ce qui permet de diminuer le temps de réponse global du système 10 entre la demande d'injection de réactif et l'injection effective de réactif dans la ligne 12.

Le véhicule peut en outre comporter des moyens permettant d'obtenir une information sur la pression extérieure (mesurée ou estimée) et une information sur la température extérieure (mesurée ou estimée).

Le véhicule comporte en outre un calculateur adapté à mettre en oeuvre un procédé de contrôle du fonctionnement d'un système de post-traitement des gaz d'échappement d'un moteur.

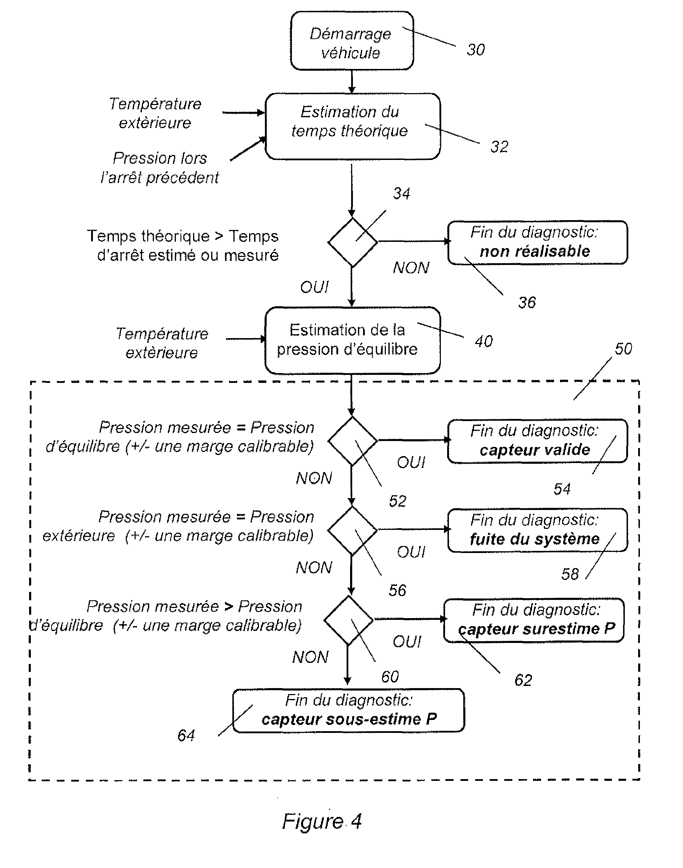

La figure 4 illustre un organigramme d'un exemple de mise en oeuvre d'un tel procédé de contrôle. Le procédé comporte une étape 40 d'estimation de la pression d'équilibre $P_{équilibre}$ au niveau du capteur 20 en fonction de la température extérieure.

Le procédé comprend aussi une étape 50 de comparaison d'une pression mesurée par le capteur 20 à la pression d'équilibre et à la pression extérieure.

Le procédé permet ainsi de diagnostiquer une dérive du capteur 20 de pression et/ou une fuite entre le réservoir 16 et l'organe 18 d'injection par comparaison de la pression d'équilibre $P_{équilibre}$ avec la pression mesurée lorsque le système 10 est au repos. Cela permet de réduire le coût du capteur 20 de pression de réactif et permet également de réduire le coût global du système de dépollution en proposant un moyen pour détecter une fuite de réactif, sans ajout d'un capteur dédié. Le procédé permet donc de contrôler le fonctionnement d'un système 10 de post-traitement des gaz d'échappement de manière plus complète.

Selon l'exemple de mise en oeuvre de la figure 4, le procédé comporte une étape 30 de détection du démarrage du moteur. Le procédé comporte en outre une étape 32 d'estimation du temps théorique au bout duquel la pression du réactif atteint la pression d'équilibre $P_{équilibre}$ en fonction de la température extérieure et de la pression lors de l'arrêt précédent du moteur. Le temps théorique est ainsi un temps de chute de pression. Le temps théorique est facilement estimable suivant le type de cartouche et la température extérieure (par exemple via un modèle de chute de pression).

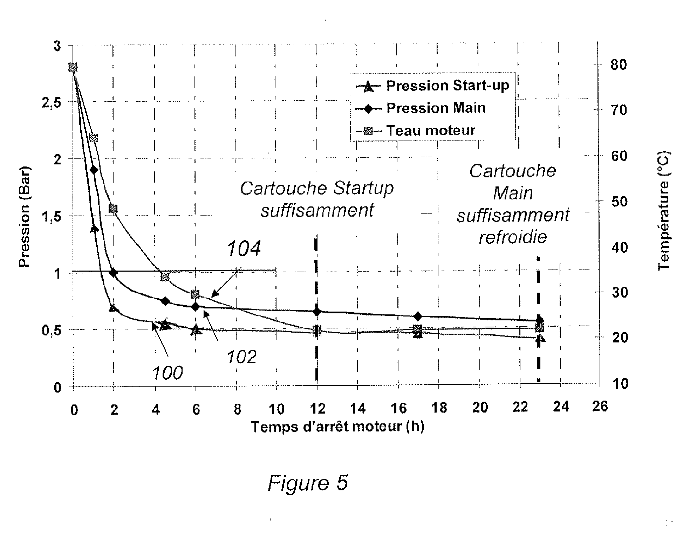

L'existence du temps théorique est illustrée par les figures 4 et 5. La figure 5 montre l'évolution de la pression dans les cartouches en fonction du temps d'arrêt moteur. Les courbes 100, 102 et 104 correspondent respectivement à l'évolution de la pression dans le réservoir 22, de la pression dans le réservoir 16 et la température de l'eau du moteur. Le temps théorique est de 12 heures pour le réservoir 22 et de 23 heures pour le réservoir 16.

Le procédé peut aussi comporter une étape 34 de comparaison du temps théorique estimé avec le temps d'arrêt du moteur. Le temps d'arrêt peut être estimé ou mesuré.

Le procédé peut comporter en outre une étape 36 d'arrêt du procédé si le temps théorique estimé est supérieur au temps d'arrêt. Cela permet d'éviter de mettre en oeuvre le procédé lorsqu'il ne permet pas d'obtenir de résultat fiable pour le contrôle du fonctionnement du système 10.

Pour augmenter encore cet effet, il est avantageux que l'étape d'estimation du temps théorique, l'étape 34 de comparaison et l'étape 36 d'arrêt éventuel aient lieu entre l'étape 30 de détection et l'étape 40 d'estimation de la pression d'équilibre $P_{équilibre}$.

L'étape 30 de comparaison des pressions permet d'obtenir un diagnostic, c'est-à-dire un contrôle de l'état de fonctionnement.

Si la pression mesurée $P_{mesurée}$ est égale à la pression d'équilibre $P_{équilibre}$ avec une marge de tolérance notée $P_{marge}$, il est détecté que le fonctionnement du capteur 20 est correct. Cela correspond au test de l'étape 52 pour lequel une réponse positive amène le résultat 54.

La marge de tolérance permet de prendre en compte la précision du capteur 20 et notamment sa répétitivité pour une mesure. La marge de tolérance peut ainsi être réglable par exemple pour être adaptée au type de capteur de pression utilisé.

On entend par le fait que la pression mesurée $P_{mesurée}$ est égale à la pression d'équilibre $P_{équilibre}$ avec une marge de tolérance notée $P_{marge}$, le fait que la pression mesurée est comprise dans un intervalle de pression dont les extrémités sont la pression d'équilibre $P_{équilibre}$ à laquelle une marge de tolérance $P_{marge}$ est soustraite et la pression d'équilibre $P_{équilibre}$ à laquelle la marge $P_{marge}$ est additionnée. Cette condition signifie également que la pression mesurée $P_{mesurée}$ est supérieure à la pression d'équilibre $P_{équilibre}$ à laquelle la marge de tolérance $P_{marge}$ est soustraite et elle est inférieure à la pression d'équilibre $P_{équilibre}$ à laquelle la marge de tolérance $P_{marge}$ est additionnée. Cela se traduit de manière mathématique par l'encadrement suivant pour la pression mesurée $P_{mesurée}$ :

$$P_{équilibre} - P_{marge} < P_{mesurée} < P_{équilibre} + P_{marge} \quad (1)$$

L'utilisation de la mesure de pression du capteur 20 et de l'estimation de la pression d'équilibre $P_{équilibre}$ à l'étape 50 de comparaison permet ainsi de mettre en évidence que le capteur 20 de pression fonctionne correctement.

Lorsque la pression mesurée $P_{mesurée}$ n'est pas égale à la pression d'équilibre $P_{équilibre}$ avec une marge de tolérance notée $P_{marge}$ c'est-à-dire que la condition (1) n'est pas vérifiée, plusieurs situations peuvent être envisagées.

Dans le cas où la pression mesurée est égale à la pression extérieure $P_{extérieure}$ avec la marge de tolérance $P_{marge}$ (condition notée 2 dans la suite), il est détecté une fuite du réactif entre le réservoir 16 et l'organe 18 de dosage. Cela correspond au test 56 pour lequel une réponse positive amène le résultat 58.

Cette détection de fuite a donc lieu lorsqu'il est détecté que la pression mesurée $P_{mesurée}$ vérifie la condition 2 tout en ne vérifiant pas la condition 1. Cela peut s'exprimer de manière équivalente de la manière suivante : la pression mesurée $P_{mesurée}$ est comprise dans un intervalle de pression dont les extrémités sont la pression extérieure $P_{extérieure}$ à laquelle une marge de tolérance $P_{marge}$ est soustraite et la pression extérieure $P_{extérieure}$ à laquelle la marge $P_{marge}$ est additionnée, et, en outre, la pression mesurée $P_{mesurée}$ est supérieure à la pression d'équilibre $P_{équilibre}$ à laquelle est additionnée la marge de tolérance $P_{marge}$ ou la pression mesurée $P_{mesurée}$ est inférieure à la pression d'équilibre $P_{équilibre}$ à laquelle est soustraite la marge de tolérance $P_{marge}$.

La comparaison de la mesure de pression du capteur 20 à la pression d'équilibre $P_{équilibre}$ à l'étape 50 de comparaison permet ainsi de mettre en évidence l'existence d'une fuite au niveau du réservoir 16.

Dans le cas où la pression n'est pas égale à la pression extérieure $P_{extérieure}$ avec la marge de tolérance $P_{marge}$, la pression ne vérifie plus la condition 2. Cela signifie que la pression mesurée $P_{mesurée}$ est supérieure à la pression extérieure $P_{extérieure}$ à laquelle est additionnée la marge de tolérance $P_{marge}$ ou que la pression mesurée $P_{mesurée}$ est inférieure à la pression extérieure $P_{extérieure}$ à laquelle est soustraite la marge de tolérance $P_{marge}$. Dans ce cas particulier dans lequel la pression mesurée $P_{mesurée}$ ne vérifie ni la condition 2 ni la condition 1, il existe deux possibilités : soit la pression $P_{mesurée}$ est supérieure à la pression d'équilibre $P_{équilibre}$ à laquelle la marge de tolérance $P_{marge}$ est additionnée (condition 3), soit la pression mesurée $P_{mesurée}$ est inférieure à la pression d'équilibre $P_{équilibre}$ à laquelle la marge de tolérance $P_{marge}$ est soustraite (condition 4).

Dans le cas où la condition 3 ou 4 est remplie, il est détecté un mauvais fonctionnement du capteur 20 se traduisant par une dérive de la valeur mesurée. En effet, la pression $P_{équilibre}$ est censée être la pression du système 10 (à une marge de tolérance près) et si une pression très différente est mesurée, cela est le signe que le capteur 20 présente une dérive. Plus précisément, lorsque la condition 3 est vérifiée, cela correspond à un capteur 20 de pression surestimant la pression et lorsque la condition 4 est vérifiée, cela correspond à une situation dans laquelle le capteur 20 de pression sous-estime la pression.

Selon l'exemple de mise en oeuvre du procédé de la figure 4, le test pour les conditions 3 et 4 est effectué à l'étape 60, une réponse positive amenant le résultat 62 d'un capteur 20 surestimant la pression et une réponse négative amenant le résultat 64 d'un capteur 20 sous-estimant la pression. La mise en oeuvre successive des trois tests 52, 56 et 60 à l'étape de comparaison 50 permet donc en trois étapes de comparaison d'obtenir l'état de fonctionnement du système 10.

## Revendications

1.  Un procédé de contrôle du fonctionnement d'un système (10) de post-traitement des gaz d'échappement d'un moteur par injection d'un réactif à l'échappement, le système (10) ayant une position ouverte et une position fermée et comportant :

    - un réservoir (16, 22) comprenant un réactif,
    - un organe (18) de dosage injectant le réactif dans les gaz d'échappement dans la position ouverte,
    - un capteur (20) de pression placé entre le réservoir (16, 22) et l'organe (18) de dosage,

    la pression du réactif tendant vers une pression d'équilibre ($P_{équilibre}$) dans la position fermée du système (10), **caractérisé en ce que** le procédé comporte les étapes suivantes, quand le système (10) est en position fermée :

    - estimation d'une pression d'équilibre ($P_{équilibre}$) au niveau du capteur (20) en fonction de la température extérieure,
    - comparaison d'une pression mesurée ($P_{mesurée}$) par le capteur (20) à la pression d'équilibre ($P_{équilibre}$) et à la pression extérieure ($P_{extérieure}$).

2.  Le procédé selon la revendication 1, **caractérisé en ce que** le réservoir (16,22) comporte en outre un sel comportant le réactif, le profil de désorption du sel dépendant de la température et de la pression.

3.  Le procédé selon l'une des revendications 1 ou 2, **caractérisé en ce que** le procédé comporte en outre les étapes de :

    - détection d'un démarrage du moteur à la suite d'un arrêt du moteur,
    - estimation du temps théorique au bout duquel la pression du réactif atteint la pression d'équilibre ($P_{équilibre}$)

en fonction de la température extérieure et de la pression au début de l'arrêt du moteur,
- comparaison du temps théorique estimé avec le temps d'arrêt du moteur,
- arrêt du procédé si le temps théorique estimé est supérieur au temps d'arrêt.

**4.** Le procédé selon la revendication 3, **caractérisé en ce que** le temps d'arrêt est estimé ou mesuré.

**5.** Le procédé selon l'une des revendications 1 à 4, **caractérisé en ce qu'**à l'étape de comparaison des pressions,

- si la pression mesurée ($P_{mesurée}$) est égale à la pression d'équilibre ($P_{équilibre}$) avec une marge de tolérance ($P_{marge}$),

il est détecté que le fonctionnement du capteur (20) est correct.

**6.** Le procédé selon l'une des revendications 1 à 5, **caractérisé en ce qu'**à l'étape de comparaison des pressions :

- si la pression mesurée ($P_{mesurée}$) est supérieure à la pression d'équilibre ($P_{équilibre}$) à laquelle une marge ($P_{marge}$) de tolérance est additionnée et
- si la pression mesurée ($P_{mesurée}$) est supérieure à la pression extérieure ($P_{extérieure}$) à laquelle est additionnée la marge de tolérance ($P_{marge}$) ou si la pression mesurée ($P_{mesurée}$) est inférieure à la pression extérieure ($P_{extérieure}$) à laquelle est soustraite la marge de tolérance ($P_{marge}$),

il est détecté que le capteur (20) surestime la pression.

**7.** Le procédé selon l'une des revendications 1 à 6, **caractérisé en ce qu'**à l'étape de comparaison des pressions :

- si la pression mesurée ($P_{mesurée}$) est inférieure à la pression d'équilibre ($P_{équilibre}$) à laquelle une marge de tolérance ($P_{marge}$) est soustraite et
- si la pression mesurée ($P_{mesurée}$) est supérieure à la pression extérieure ($P_{extérieure}$) à laquelle est additionnée la marge de tolérance ($P_{marge}$) ou si la pression mesurée ($P_{mesurée}$) est inférieure à la pression extérieure ($P_{extérieure}$) à laquelle est soustraite la marge de tolérance ($P_{marge}$),

il est détecté que le capteur (20) sous-estime la pression.

**8.** Le procédé selon l'une des revendications 1 à 7, **caractérisé en ce qu'**à l'étape de comparaison des pressions :

- si la pression mesurée ($P_{mesurée}$) est égale à la pression extérieure ($P_{extérieure}$) avec une marge de tolérance ($P_{marge}$), et
- si la pression mesurée ($P_{mesurée}$) est supérieure à la pression d'équilibre ($P_{équilibre}$) à laquelle est additionnée la marge de tolérance ($P_{marge}$) ou si la pression mesurée ($P_{mesurée}$) est inférieure à la pression d'équilibre ($P_{équilibre}$) à laquelle est soustraite la marge de tolérance ($P_{marge}$),

il est détecté une fuite du réactif entre le réservoir (16,22) et l'organe (18) de dosage.

**9.** Le procédé selon l'une des revendications 5 à 8, **caractérisé en ce que** la marge de tolérance ($P_{marge}$) est réglable.

**10.** Un véhicule comportant d'un système (10) de post-traitement des gaz d'échappement d'un moteur par injection d'un réactif à l'échappement, le système (10) ayant une position ouverte et une position fermée et comportant :

- un réservoir (16, 22) comprenant un réactif,
- un organe (18) de dosage injectant le réactif dans les gaz d'échappement dans la position ouverte,
- un capteur (20) de pression placé entre le réservoir (16, 22) et l'organe (18) de dosage,

la pression du réactif tendant vers une pression d'équilibre ($P_{équilibre}$) dans la position fermée du système (10), **caractérisé en ce que** le véhicule comporte en outre un calculateur adapté à mettre en oeuvre le procédé selon l'une des revendications précédentes, en faisant, quand le système (10) est en position fermée :

- une estimation d'une pression d'équilibre ($P_{équilibre}$) au niveau du capteur (20) en fonction de la température extérieure,

- une comparaison d'une pression mesurée ($P_{mesurée}$) par le capteur (20) à la pression d'équilibre ($P_{équilibre}$) et à la pression extérieure ($P_{extérieure}$).

Figure 1

Figure 2

Figure 3

Démarrage
véhicule    30

Température
extérieure    →  Estimation du
temps théorique    32

Pression lors
l'arrêt précédent

Temps théorique > Temps
d'arrêt estimé ou mesuré    34    NON →  Fin du diagnostic:
**non réalisable**    36

OUI

Température
extérieure    →  Estimation de la
pression d'équilibre    40    50

Pression mesurée = Pression
d'équilibre (+/- une marge calibrable)    OUI →  Fin du diagnostic:
*capteur valide*    54

NON    52

Pression mesurée = Pression
extérieure  (+/- une marge calibrable)    OUI →  Fin du diagnostic:
*fuite du système*    58

NON    56

Pression mesurée > Pression
d'équilibre  (+/- une marge calibrable)    OUI →  Fin du diagnostic:
*capteur surestime P*    62

NON    60

Fin du diagnostic:
*capteur sous-estime P*    64

*Figure 4*

*Figure 5*

**EP 2 441 933 A1**

Europäisches
Patentamt

European
Patent Office

Office européen
des brevets

# RAPPORT DE RECHERCHE EUROPEENNE

Numéro de la demande

EP 11 18 2145

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 236 784 A1 (AMMINEX AS [DK]) 6 octobre 2010 (2010-10-06) | 1,2,10 | INV. F01N11/00 |
| Y | * alinéas [0013], [0017], [0031], [0040], [0042]; figure 6 * | 8 | F02D41/22 C01C1/00 G01F23/24 |
| X | EP 2 181 963 A1 (AMMINEX AS [DK]) 5 mai 2010 (2010-05-05) * alinéa [0030] - alinéa [0034] * | 1,2,10 | F01N3/20 B01D53/56 B01D53/90 |
| Y | JP 4 225769 A (MITSUBISHI HEAVY IND LTD) 14 août 1992 (1992-08-14) * abrégé * | 8 | ADD. F01N9/00 |
| A | DE 10 2007 033470 A1 (CONTINENTAL AUTOMOTIVE GMBH [DE]) 22 janvier 2009 (2009-01-22) * alinéas [0014], [0015], [0026]; revendication 9 * | 1-10 | |
| A | US 2006/168941 A1 (PFAEFFLE ANDREAS [DE] ET AL) 3 août 2006 (2006-08-03) * alinéa [0040] - alinéa [0046]; figure 1 * | 1-10 | |

DOMAINES TECHNIQUES RECHERCHES (IPC)

F01N
F02D
G01F
C01C
B01D

Le présent rapport a été établi pour toutes les revendications

| Lieu de la recherche | Date d'achèvement de la recherche | Examinateur |
|---|---|---|
| La Haye | 9 janvier 2012 | Tortosa Masiá, A |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 11 18 2145

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-01-2012

| Document brevet cité au rapport de recherche | Date de publication | Membre(s) de la famille de brevet(s) | Date de publication |
|---|---|---|---|
| EP 2236784 A1 | 06-10-2010 | EP 2236784 A1<br>EP 2409006 A1<br>WO 2010105833 A1 | 06-10-2010<br>25-01-2012<br>23-09-2010 |
| EP 2181963 A1 | 05-05-2010 | CN 102171147 A<br>EP 2181963 A1<br>EP 2349927 A1<br>US 2010086467 A1<br>WO 2010040595 A1 | 31-08-2011<br>05-05-2010<br>03-08-2011<br>08-04-2010<br>15-04-2010 |
| JP 4225769 A | 14-08-1992 | AUCUN | |
| DE 102007033470 A1 | 22-01-2009 | DE 102007033470 A1<br>WO 2009010569 A1 | 22-01-2009<br>22-01-2009 |
| US 2006168941 A1 | 03-08-2006 | DE 102005001119 A1<br>JP 2006194249 A<br>US 2006168941 A1 | 20-07-2006<br>27-07-2006<br>03-08-2006 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2930283 A
- US 20100021780 A
- US 6209315 B
- US 2009113877 A